(19) Europäisches Patentamt
European Patent Office
Office européen des brevets

(11) **EP 3 046 250 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(51) Int Cl.:
***H02P 21/00*** *(2016.01)*

(21) Anmeldenummer: **15200641.7**

(22) Anmeldetag: **17.12.2015**

(54) **VERFAHREN ZUR DREHMOMENTÜBERWACHUNG UND UMRICHTER**

METHOD FOR TORQUE MONITORING AND CONVERTER

PROCÈDE DE SURVEILLANCE DE COUPLE ET CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2015 DE 102015000086**

(43) Veröffentlichungstag der Anmeldung:
**20.07.2016 Patentblatt 2016/29**

(73) Patentinhaber: **Baumüller Nürnberg GmbH
90482 Nürnberg (DE)**

(72) Erfinder: **LELKES, András
90491 Nürnberg (DE)**

(74) Vertreter: **FDST Patentanwälte
Nordostpark 16
90411 Nürnberg (DE)**

(56) Entgegenhaltungen:
**DE-A1-102009 021 823**

**EP 3 046 250 B1**

**Beschreibung**

Die Erfindung betrifft ein Verfahren zur Drehmomentüberwachung eines mittels eines Umrichters betriebenen Elektromotors sowie einen Umrichter.

Industrieanlagen weisen üblicherweise eine Vielzahl an rotierenden elektrischen Maschinen auf, mittels derer beispielsweise Werkzeuge oder Förderbänder angetrieben werden. Die hierfür benötigte elektrische Energie wird mittels Umrichtern bereitgestellt, die signaltechnisch mit einer Prozesssteuerung gekoppelt sind. Mittels der Prozesssteuerung wird eine Soll-Drehzahl vorgegeben, auf die die jeweilige elektrische Maschine mittels des zugeordneten Umrichters geregelt wird. Der Umrichter ist elektrisch mit einem Versorgernetzwerk gekoppelt und weist einen Halbleiterschalter auf, der in Reihe zwischen dem Versorgernetzwerk und der elektrischen Maschine geschaltet ist. Die Ansteuerung des Halbleiterschalters erfolgt derart, dass die Drehzahl der elektrischen Maschine der von der Steuerung vorgegebenen Soll-Drehzahl entspricht. Die mittels des Halbleiterschalters geschalteten elektrischen Spannungen betragen üblicherweise über 800 Volt. Die geschalteten elektrischen Ströme weisen eine Stromstärke oberhalb von 1 A oder 10 A auf.

Um eine Verletzung von Bedienpersonal der elektrischen Maschine auszuschließen oder derartige Folgen zu vermindern, sind sogenannte "Not-Aus"-Schalter bekannt. Bei einer unbefugten oder ungewollten Annäherung einer Person an die elektrische Maschine wird dieser Schalter manuell betätigt, um einen Betrieb der elektrischen Maschine im Wesentlichen unverzüglich zu beenden. Hierfür ist der Schalter meist signaltechnisch mit der Prozesssteuerung gekoppelt. Mittels der Prozesssteuerung wird bei Betätigung des Schalters ein Signal an das Regelteil übermittelt, und infolgedessen wird die Bestromung der elektrischen Maschine unterbunden. Hierfür wird der Leistungshalbleiterschalter meist in einen elektrisch nicht leitenden Zustand versetzt.

Soll jedoch die elektrische Maschine oder aber das mittels der elektrischen Maschine angetriebene Werkzeug eingestellt oder kalibriert werden, ist eine derartige Sicherheitsfunktion nicht geeignet, da auf diese Weise nicht der vollständige mittels des Werkzeugs abgefahrene Bereich kontrolliert werden kann. Daher ist es üblich, die elektrische Maschine mit einer begrenzten Drehzahl zu betreiben, bei der eine Verletzung einer das Werkzeug bzw. die elektrische Maschine einstellenden Person ausgeschlossen ist. Hierfür wird die Drehzahl der elektrischen Maschine erfasst oder berechnet, und bei einem Überschreiten der begrenzten Drehzahl wird der Umrichter stromlos geschaltet. Die Auswertung der Drehzahl ist vergleichsweise zeitaufwendig, so dass bei einer vergleichsweise rapiden Drehzahlzunahme aufgrund des zeitlichen Nachlaufs ("time lag") bis zu einer Abschaltung dennoch eine Verletzung auftreten kann.

Aus DE 10 2009 021 823 A1 ist ein Verfahren zum Betreiben einer Drehstrommaschine, die von einem 3-Phasen-Stromrichter gespeist wird, unter Verwendung eines Ständerflussreglers und eines Schlupffrequenzreglers oder unter Verwendung eines Ständerflussreglers und eines Drehmomentreglers bekannt. Ein dem Schlupffrequenzregler oder dem Drehmomentregler zugeführter Sollwert wird auf einen Schlupffrequenzmaximalwert bzw. Drehmomentmaximalwert begrenzt.

Der Erfindung liegt die Aufgabe zugrunde, ein besonders geeignetes Verfahren eines mittels eines Umrichters betriebenen Elektromotors sowie einen besonders geeigneten Umrichter anzugeben, bei denen zweckmäßigerweise eine Sicherheit erhöht ist.

Hinsichtlich des Verfahrens wird diese Aufgabe durch die Merkmale des Anspruchs 1 und hinsichtlich des Umrichters durch die Merkmale des Anspruchs 10 erfindungsgemäß gelöst. Vorteilhafte Weiterbildungen und Ausgestaltungen sind Gegenstand der Unteransprüche.

Das Verfahren dient dem Betrieb eines Umrichters und/oder eines Elektromotors, wobei der Elektromotor mittels des Umrichters bestromt wird. Der Elektromotor ist beispielsweise ein Synchron- oder Asynchronmotor. Geeigneterweise weist der Elektromotor zwei oder drei elektrische Phasen auf, die zueinander um insbesondere 120° versetzt sind. Der Umrichter weist vorzugsweise einen Halbleiterschalter, beispielsweise vier oder sechs Halbleiterschalter auf, die zweckmäßigerweise in einer Brückenschaltung miteinander verschaltet sind. Mit anderen Worten weist die Umrichter eine B4- oder B6-Schaltung auf. Vorzugsweise umfasst der Umrichter einen Zwischenkreis der gegen die Brückenschaltung geführt ist. Insbesondere umfasst der Umrichter eine Gleichrichterseite, die mit einem Versorgungsnetz gekoppelt ist, die beispielsweise einen Drehstrom mit einer Frequenz von 50 Hz oder 60 Hz aufweist.

Mit dem Verfahren wird das mittels des Elektromotors aufgebrachte Drehmoment überwacht. Hierfür wird in einem ersten Arbeitsschritt ein elektrischer Motorstrom erfasst. Es wird also der mit Hilfe des Umrichters bereitgestellte elektrische Strom erfasst, mittels dessen der Elektromotor bestromt wird. Dies erfolgt zweckmäßigerweise mittels eines Sensors zum Strommessen, also mittels direkter Messung. Folglich wird der Motorstrom gemessen. Vorzugsweise wird der elektrische Stromfluss einer Leitung erfasst, mittels derer der Umrichter und der Elektromotor elektrisch verbunden sind. Beispielsweise umfasst der Stromsensor einen Hall-Sensor, der geeigneterweise innerhalb eines Schlitzes eines geschlitzten Rings aus einem weichmagnetischen Material positioniert ist. Hierbei umgibt der Ring zweckmäßigerweise die Leitung, mittels derer der Elektromotor bestromt wird.

In einem weiteren Arbeitsschritt, der vorzugsweise zeitgleich erfolgt, wird ein Hilfswert erfasst. Insbesondere wird der Hilfswert gemessen. Der Hilfswert ist zweckmäßigerweise ein Betriebsparameter des Elektromotors, der in Abhängigkeit der Bestromung des Elektromotors des Umrichters variiert. Als Hilfswert wird hierbei zweckmäßigerweise eine derartige Größe herangezogen, der vorzugsweise einen vergleichsweise geringen Zeitversatz zu einer veränderten Bestromung aufweist. Insbesondere wird als Hilfswert eine Größe des Elektromotors herangezogen, der zu einer Ableitung des mittels des Elektromotors erstellten Drehmoments korrespondiert. Die Ableitung ist beispielsweise eine zeitliche Ableitung und der Hilfswert weist zweckmäßigerweise einen funktionalen Zusammenhang zu der Ableitung des Drehmoments auf.

In einem weiteren Arbeitsschritt wird ein erstes maximales Drehmoment bestimmt. Das erste maximale Drehmoment ist beispielsweise von einer Stellung eines Rotors der elektrischen Maschine zu einem Stator abhängig. Besonders bevorzugt jedoch wird das erste maximale Drehmoment mittels einer Prozesssteuerung vorgegeben und insbesondere mittels einer sicheren Funktion. Hierbei ist das erste maximale Drehmoment derart bemessen, dass eine Verletzung eines Bedienpersonals, das sich in unmittelbarer Nähe zu dem Elektromotor aufhält und von diesem oder einem mittels des Elektromotors angetriebenen Werkzeug erfasst wird, ausgeschlossen oder unterhalb einer bestimmten Grenze ist. Insbesondere entspricht das erste maximale Drehmoment einer gesetzlichen Anforderung an die Sicherheit des Elektromotors.

In einem weiteren Arbeitsschritt wird anhand des ersten maximalen Drehmoments und des erfassten Motorstroms ein erwarteter maximaler Hilfswert bestimmt. Der erwartete maximale Hilfswert weist die gleiche Dimension des Hilfswerts auf und entspricht geeigneterweise einer Ableitung des Drehmoments des Elektromotors. Hierbei korrespondiert der erwartete maximale Hilfswert mit dem Wert, der zu einem Anstieg des aktuellen Drehmoments des Elektromotors zu dem ersten maximalen Drehmoment führen würde. Sofern der Hilfswert folglich einer zeitlichen Ableitung des Drehmoments entspricht, ist der erwartete maximale Hilfswert die Differenz des ersten maximalen Drehmoments abzüglich des aktuellen Drehmoments geteilt durch eine bestimmte Zeitspanne.

In einem weiteren Arbeitsschritt wird der erfasste Hilfswert mit dem erwarteten maximalen Hilfswert verglichen. Mit anderen Worten wird überprüft, ob das Drehmoment des Elektromotors innerhalb der bestimmten Zeitspanne das maximale Drehmoment überschreiten wird. Insbesondere wird das Verfahren bei Betrieb des Umrichters und/oder des Elektromotors im Wesentlichen kontinuierlich ausgeführt, wobei zweckmäßigerweise die bestimmte Zeitspanne gleich dem Wert ist, der zwischen der jeweils erneuten Bestimmung des Motorstroms und des Hilfswerts liegt. Zumindest jedoch ist die bestimmte Zeitspanne größer als der zeitliche Abstand zwischen der erneuten Bestimmung des Motorstroms und des Hilfswerts. Auf diese Weise ist sichergestellt, dass bei jeder erneuten Erfassung auch ein Überschreiten des maximalen Drehmoments innerhalb der zur erneuten Bestimmung des erwarteten maximalen Hilfswerts benötigten Zeitspanne bekannt ist.

Zusammenfassend wird überwacht, ob innerhalb der bestimmten Zeitspanne das Drehmoment des Elektromotors das maximale Drehmoment überschreitet. Auf diese Weise ist bereits im Voraus bekannt, ob das maximale Drehmoment überschritten wird, und folglich ein Aufenthalt in dem Umfeld des Elektromotors unsicher ist. Zweckmäßigerweise wird bei Bestimmung des erwarteten maximalen Hilfswerts eine Abhängigkeit des erwarteten maximalen Hilfswerts von Umgebungsparametern des Elektromotors berücksichtigt, wie z.B. einer Temperatur. Insbesondere ist bei einer erhöhten Betriebstemperatur des Elektromotors der erwartete maximale Hilfswert größer als bei einer vergleichsweise niedrigen Betriebstemperatur. Vorzugsweise werden die zur Bestimmung des erwarteten maximalen Hilfswerts herangezogenen Umgebungsparameter nachgeführt. Geeigneterweise wird die Drehzahl des Elektromotors erfasst. Insbesondere wird der Elektromotor auf eine bestimmte Soll-Drehzahl geregelt und/oder es wird ein Grenzwert für die Drehzahl herangezogen. Bei Überschreiten des Grenzwertes wird geeigneterweise der Elektromotor stillgesetzt. Zweckmäßigerweise wird zur Bestimmung des erwarteten maximalen Hilfswerts die Drehzahl des Elektromotors herangezogen.

Geeigneterweise ist der Umrichter und/oder der Elektromotor Bestandteil einer Industrieanlage. Insbesondere weist der Umrichter eine maximale Leitungsabgabe zwischen 700 W und 500 kW auf. Zweckmäßigerweise ist die Leitungsabgabe größer oder gleich 1 kW, 5 kW, 10 kW, 50 kW, 100 kW oder 200 kW. Zum Beispiel ist die Leitungsabgabe kleiner oder gleich 400 kW, 250 kW, 100 kW, 50 kW, 15 kW oder 2 kW.

Beispielsweise wird ein Fehlerfall erkannt, falls der erfasste Hilfswert größer als der erwartete maximale Hilfswert ist. Vorzugsweise wird eine sichere Funktion ausgeführt, falls der erfasste Hilfswert größer als der erwartete maximale Hilfswert ist. Insbesondere wird folglich die sichere Funktion ausgeführt, falls innerhalb der bestimmten Zeitspanne ein Überschreiten des maximalen Drehmoments durch das Drehmoment des Elektromotors zu erwarten ist. Als sichere Funktion wird zweckmäßigerweise ein sicher abgeschaltetes Moment herangezogen ("safe torque off"; STO). Hierbei wird zweckmäßigerweise die Bestromung des Elektromotors unterbrochen, so dass ein etwaiger Rotor austrudelt. Hierbei werden zweckmäßigerweise sämtliche Impulse gelöscht, mittels derer etwaige Halbleiterschalter des Umrichters angesteuert werden. Mit anderen Worten ist der Elektromotor nach Aktivierung der sicheren Funktion drehmomentfrei. Zweckmäßigerweise ist der Elektromotor auch gegen einen etwaigen Wiederanlauf geschützt. Alternativ wird als sichere Funktion sicherer Stopp herangezogen.

Vorzugsweise werden der Hilfswert und der erwartete maximale Hilfswert vorzeichenlos gewählt. Mit anderen Worten wird mittels des erwarteten maximalen Hilfswerts ein Bereich bestimmt, nämlich zwischen dem mit negativen Vorzeichen versehenen erwarteten maximalen Hilfswert und dem mit positiven Vorzeichen versehenen erwarteten maximalen Hilfswert. Hierbei wird der Hilfswert daraufhin überwacht, dass dieser zwischen dem mit negativen Vorzeichen versehenen maximalen Hilfswert und dem mit positiven Vorzeichen versehenen maximalen Hilfswert verbleibt. Auf diese Weise ist die Drehmomentüberwachung unabhängig von der Drehrichtung des Elektromotors, und auch eine etwaige, ungewollte Drehrichtungsumkehr des Elektromotors wird berücksichtigt. Zusammenfassend wird anhand des ersten maximalen Drehmoments und des erfassten Motorstroms ein Bereich bestimmt, und es wird überprüft, ob der erfasste Hilfswert innerhalb des Bereichs ist. Alternativ wird der Hilfswert und der erwartete maximale Hilfswert mit Vorzeichen gewählt sowie ein zweiter erwarteter maximaler Hilfswert, wobei jedoch überprüft wird, dass der erfasste Hilfswert größer als der zweite erwartete maximale Hilfswert und kleiner als der erwartete maximale Hilfswert ist.

Zweckmäßigerweise wird eine drehmomentbildende Komponente eines Statorstromzeigers des elektrischen Motorstroms ermittelt. Mit anderen Worten wird anhand des erfassten elektrischen Motorstroms ein Statorstromzeiger ermittelt, also der Motorstrom in ein dq-Koordinatensystem transformiert. Hierbei bezeichnet eine Komponente des Motorstroms als Drehmomentanteil, nämlich $I_q$, und die verbleibende den Fluss, nämlich $I_d$. Der Drehmomentanteil, nämlich Iq, als drehmomentbildende Komponente des Statorstromzeigers des elektrischen Motorstroms herangezogen. Anhand der drehmomentbildenden Komponente des Statorstromzeigers wird ein aktuelles Drehmoment des Elektromotors bestimmt, also das Drehmoment, das zum Zeitpunkt der Erfassung des Motorstroms mittels des Elektromotors aufgebracht wird. Als Drehmoment wird beispielsweise die drehmomentbildende Komponente des Statorstromzeigers herangezogen oder aber die mit einem Faktor multiplizierte drehmomentbildende Komponente des Statorstromzeigers. Insbesondere wird als Drehmoment ein absoluter Wert und kein Vektor herangezogen.

Insbesondere wird eine sichere Funktion ausgeführt, falls das aktuelle Drehmoment, also insbesondere die drehmomentbildende Komponente des Statorstromzeigers des elektrischen Motorstroms, größer als ein zweites maximales Drehmoment ist. Beispielsweise wird als zweites maximales Drehmoment das erste maximale Drehmoment herangezogen. Als sichere Funktion wird geeigneterweise sicher abgeschaltetes Moment (STO) oder sicherer Stopp herangezogen. Mit anderen Worten wird bei einem direkten Überschreiten des zweiten maximalen Drehmoments die sichere Funktion ausgeführt, die geeigneterweise die gleiche ist, die bei Überschreiten des maximalen Hilfswerts durch den erfassten Hilfswert ausgeführt wird. Folglich wird sowohl bei einem erwarteten Überschreiten des ersten maximalen Drehmoments und auch bei einem beobachteten Überschreiten des zweiten maximalen Drehmoments die sichere Funktion ausgeführt. Hierbei wird vorzugsweise eine Impulssperre ausgeführt, so dass etwaige Halbleiterschalter des Umrichters gesperrt sind, also keinen elektrischen Strom führen.

Beispielsweise ist das erste maximale Drehmoment fest vorgegeben, also unabhängig von aktuellen Anforderungen. Alternativ hierzu ist das erste maximale Drehmoment abhängig von einer Stellung eines Rotors bezüglich eines Stators der elektrischen Maschine. Alternativ hierzu wird das aktuelle Drehmoment, insbesondere die drehmomentbildende Komponente des Statorstromzeigers des elektrischen Motorstroms, zuzüglich eines ersten Wertes als erstes maximales Drehmoment herangezogen. Beispielsweise ist der erste Wert fest vorgegeben. Folglich wird eine maximale Veränderung des aktuellen Drehmoments vorgegeben.

Geeigneterweise wird als Hilfswert eine Stromänderung herangezogen, also eine Änderung des erfassten elektrischen Motorstroms, insbesondere seit dessen letzter zeitlicher Ermittlung. Vorzugsweise wird bei Betrieb des Umrichters und/oder des Elektromotors der elektrische Motorstrom in diskreten Zeitabschnitten erfasst, z. B. kontinuierlich. Alternativ wird ein magnetischer Fluss als Hilfswert gewählt. Insbesondere wird eine zu der drehmomentbildenden Komponente des Statorstromzeigers des elektrischen Motorstroms orthogonale Komponente des elektrischen Motorstroms als magnetischer Fluss und folglich als Hilfswert herangezogen. Folglich wird der Hilfswert bei Erfassung des elektrischen Motorstroms mit erfasst, wobei der erfasste elektrische Motorstrom in die drehmomentbildende Komponente und den Hilfswert, nämlich den magnetischen Fluss, zerlegt wird. Auf diese Weise sind vergleichsweise wenige Sensoren zur Ausführung des Verfahrens erforderlich.

Beispielsweise wird der als magnetischer Fluss ein Statorflussraumzeiger herangezogen, der insbesondere der Gleichung

$$\overrightarrow{\Psi_1} = \int (\overrightarrow{u_1} - R_1 \cdot \vec{i}_1)\, dt$$

gehorcht. Hierbei bezeichnet $\overrightarrow{u_1}$ den Raumzeiger der elektrischen Motorspannung, $R_1$ den Statorwiderstand, der entweder temperaturabhängig oder aber konstant gewählt ist, und $\vec{i}_1$ den Raumzeiger des elektrischen Motorstroms also den Stromraumzeiger. Bei der Integralrechnung werden entweder geeignete Grenzen gesetzt, oder aber anderweitig ein Wegdriften des Integrals verhindert.

In einer Alternative hierzu wird als magnetischer Fluss ein Rotorflussraumzeiger herangezogen. Vorzugsweise wird der Rotorflussraumzeiger anhand der Formel

$$\overrightarrow{\Psi_2} = \overrightarrow{\Psi_1} - L_1 \cdot \vec{i}_1$$

ermittelt. Hierbei bezeichnet $\overrightarrow{\Psi_1}$ den Statorflussraumzeiger, $L_1$ die Induktivität des Stators, und $\vec{i}_1$ den Stromraumzeiger, also den Raumzeiger des elektrischen Motorstroms.

Alternativ hierzu wird eine Motorspannung als Hilfswert gewählt. Insbesondere eine elektrische Statorspannung, also eine elektrische Spannung, die an dem Stator des Elektromotors anliegt. Vorzugsweise wird ein Raumzeiger der Motorspannung bestimmt. Hierbei wird bei Bestimmung des erwarteten maximalen Hilfswerts geeigneterweise ein Raumbereich bestimmt, und bei dem Vergleich wird überprüft, ob der Raumzeiger der Motorspannung innerhalb des zu dem erwarteten maximalen Hilfswert korrespondierenden Raumbereich liegt. Mit anderen Worten wird die Statorspannung begrenzt, so dass vergleichsweise schnell erkannt wird, ob ein Fehler vorliegt, der zu einem erhöhten Drehmoment führen kann. Zum Beispiel wird in Kombination hierzu der elektrische Motorstrom begrenzt, was zu einer erhöhten Sicherheit führt.

Insbesondere wird die elektrische Motorspannung gemessen, was zu einer vergleichsweise hohen Sicherheit führt. Hierfür weist der Elektromotor geeigneterweise einen Spannungssensor auf. Alternativ hierzu wird die elektrische Motorspannung anhand einer Zwischenkreisspannung des Umrichters ermittelt, was zu einer verringerten Anzahl an Bauteilen führt, sodass der Elektromotor vergleichsweise kostengünstig erstellt werden kann. Die Zwischenkreisspannung ist insbesondere diejenige elektrische Spannung, die zwischen einer Gleichrichterseite und einer Wechselrichterseite des Umrichters herrscht. Zwischen den Zwischenkreis und den Elektromotor ist ein Halbleiterschalter geschaltet. Je nach Schaltzustand des Halbleiterschalters wird der Elektromotor in eine Rotationsbewegung versetzt. Beispielsweise wird der Halbleiterschalter mittels Pulsen von einem elektrisch leitenden in einen elektrisch nicht leitenden Zustand versetzt. Insbesondere ist die Wechselrichterseite mittels einer Brückenschaltung realisiert, die den Halbleiterschalter aufweist, insbesondere mehrere Halbleiterschalter, der bzw. die bei Ausführen einer sicheren Funktion zweckmäßigerweise gesperrt ist. Zweckmäßigerweise weist der Halbleiterschalter eine Freilaufdiode auf. Geeigneterweise weist die Gleichrichterseite eine Anzahl an Dioden auf, die in einer Brückenschaltung miteinander verschaltet sind, wobei die Gleichrichterseite elektrisch zwischen einem elektrischen Versorgernetz und dem Zwischenkreis geschaltet ist.

Zweckmäßigerweise wird zur Ermittlung der elektrischen Motorspannung der Zustand des Halbleiterschalters herangezogen, der insbesondere Bestandteil der Brückenschaltung ist, sofern diese vorhanden ist. Zur Ermittlung der elektrischen Motorspannung werden somit die bekannten Schaltzustände des Halbleiterschalters herangezogen, sowie die bekannte Zwischenkreisspannung. Folglich ist eine Ermittlung der elektrischen Motorspannung ohne Zuhilfenahme von zusätzlichen Sensoren ermöglicht, wobei die Schaltsignale des Halbleiterschalters insbesondere mittels einer Elektronik des Umrichters erstellt werden.

Zusammenfassend werden insbesondere Informationen über die Motorspannung bzw. über Steuerimpulse der Halbleiterschalter des Umrichters (Zustand der Halbleiterschalter) ausgewertet und für die Drehmomentüberwachung verwendet. Die elektrische Motorspannung kann beispielsweise entweder direkt gemessen oder anhand der gemessen Zwischenkreisspannung und anhand der Information über die Schaltzustände der (motorseitigen) Halbleiterschalter (Leistungsschalter, wie IGBTs, MOSFETs, GTOs,...) des Umrichters berechnet werden.

Für die Berechnung der Drehmoment bildenden Komponente des Motorstromes und des zum kritischen Drehmoment (erstes maximales Drehmoment) gehöhrenden Grenzwertes (erwarteter maximaler Hilfswert) werden insbesondere Kenntnisse sowohl über die Amplitude als auch den Winkel des magnetischen Flusses (Motorflusses: z.B. Läuferflusses) herangezogen. Aus dieser Information ist insbesondere die innere Spannung des Motors (BEMF oder bei Synchronmotoren die Polradspannung) berechenbar.

Aus dieser Spannung und aus der Ausgangsspannung des Umrichters kann der Statorstrom über den Statorwiderstand und die Statorinduktivität berechnet werden. Beispielsweise werden dieser berechnete Statorstrom (erwarteter maximaler Hilfswert) mit dem Messsignal (Hilfswert) verglichen und bei einer übermäßigen Abweichung der Motor in einer sicheren Zustand (z.B. STO) gebracht, da diese Abweichung auf einen sicherheitskritischen Fehler in der Stromerfassung hinweisen kann. Die Grenze für die Abweichung ist insbesondere derart definiert, dass Fehlalarme möglichst vermieden werden, wobei ein Kompromiss zwischen der Güte der Diagnosefunktion und die Verfügbarkeit einer den Umrichter aufweisenden Anlage gefunden werden muss. Für eine genauere Berechnung der zu erwartenden Ströme kann zusätzlich eine Parameternachführung verwendet werden (z.B. temperaturabhängige Kompensation etwaiger Widerstandswerte oder die Verwendung von sättigungsabhängigen Induktivitätswerten).

Zusammenfassend wird bei dem Verfahren zur Drehmomentüberwachung statt einem Grenzwert für die Drehmoment bildende Stromkomponente ein erlaubter Bereich für den Hilfswert mittels des erwarteten maximalen Hilfswerts festgelegt, wobei die Überwachung abhängig von der gewünschten Sicherheitsstufe ein- oder mehrkanalig erfolgt. Als Hilfswert wird insbesondere die Motorspannung herangezogen. Folglich wird ein erlaubter Bereich für die Motorspannung festgelegt. Dieser Bereich kann in einer günstigen Ausführung als Raumzeigerbereich behandelt werden. Die erfindungsgemäße Begrenzung der Motorspannung (Statorspannung) ermöglicht eine schnellere Erkennung eines zu einem erhöhten Drehmoment führenden Fehlers einer etwaigen Motorsteuerung, weswegen der Elektromotor beispielsweise schneller in einen sicheren (zum Beispiel stromlosen) Zustand gebracht werden kann.

Beispielsweise wird in einer Weiterbildung ein elektrischer Stromfluss begrenzt, um eine weiter erhöhte Sicherheit zu erlangen. Statt der Überwachung der elektrischen Statorspannung sind insbesondere auch weitere, ähnliche Methoden gleichwertig einsetzbar. So kann zum Beispiel der Statorfluss (Statorflussraumzeiger) aus der gemessenen oder berechneten Statorspannung berechnet und überwacht werden. In diesem Fall wird nicht ein sicherer Spannungsbereich sondern ein sicherer Bereich für den Statorfluss für den aktuellen Arbeitspunkt bestimmt und überwacht. Mit anderen Worten wird der Statorfluss als magnetischer Fluss und dieser als Hilfswert bzw. erwarteter maximaler Hilfswert herangezogen.

Aufgrund des vorgeschlagenen Verfahrens ist die Drehmomentüberwachung verbessert. Es wird nämlich ein Restrisiko vermieden, das sich in einer einkanalige Strommessung trotz der Überwachung des Summenstromes verbirgt. Ferner wird bei einem etwaigen fatalen Fehler der Steuerung, bei dem falsche Impulse für etwaige Halbleiterschalter eines etwaigen Leistungsteils des Umrichters ausgegeben werden, ein Abschalten verbessert. Anderweitig könnte sich nämlich der Motorstrom mit einer vergleichsweise hohen Geschwindigkeit erhöhen. Da die Messung und Erfassung der Motorströme (unter anderem bei einer Analog-Digital-Umwandlung), sowie die Berechnung der Drehmoment bildenden Stromkomponente durch eine Koordinatentransformation (so genannte Park-Transformation) und der Vergleich mit dem Grenzwert eine nicht zu vernachlässigende Zeit in Anspruch nimmt, könnte der Elektromotor nämlich erst nach dieser Reaktionszeit abgeschaltet werden. Bei einem vergleichsweise hohem di/dt könnte der Motorstrom aber während dieser Zeit einen vergleichsweise hohen Wert erreichen. Dieser hohe Motorstrom kann auch mit einer Impulssperre (stromlose Schalten der Halbleiterschalter) nicht sofort abgeschaltet werden, da dieser Motorstrom nach der Impulssperre zunächst über etwaige Freilaufdioden des Umrichters weiterfließen könnte. Dieser hohe Motorstrom kann ein übermäßiges und sicherheitskritisch hohes Drehmoment erzeugen, was zu einem Unfall mit schweren Folgen führen kann.

Mit nochmals anderen Worten wird insbesondere anhand einer Rotorlage und anhand des maximal erlaubten Drehmoments (erstes maximales Drehmoment) der erlaubte Bereich für den Spannungsraumzeiger (Raumzeiger der Motorspannung) bestimmt. Anhand der der Steuerung der Halbleiterschalter dienenden Steuersignale des Umrichters, insbesondere anhand der sechs Steuersignale, sofern der Umrichter ein B6-Umrichter ist, und anhand einer gemessenen Zwischenkreisspannung wird die Ausgangsspannung des Umrichters, also die Statorspannung des Motors (elektrische Motorspannung), als Raumzeiger ermittelt. Gemäß des Verfahrens werden der erlaubte Bereich, der mittels des ersten maximalen Hilfswerts definiert ist, und die aktuell erzeugte Statorspannung (Hilfswert) verglichen und im Fehlerfall, der vorliegt, wenn die aktuell erzeugte Statorspannung außerhalb des erlaubte Bereichs ist, vorzugsweise ein Fehlersignal erzeugt. Aufgrund dieses Fehlersignals wird der Elektromotor vorzugsweise in einen definierten sicheren Zustand gebracht, zum Beispiel durch das Auslösen einer sicheren Funktion wie STO (Safe Torque Off).

Bei einer vektoriellen Darstellung des Statorstroms eines permanenterregten Synchronmotors mit isotroper Statorinduktivität (kein Reluktanzmoment) zeigt im Normalbetrieb (ohne Feldschwächung) der Statorstrom zeigt in q-Richtung (Id=0). Die Größe des Statorstroms ist proportional zu dem aktuellen Drehmoment. Falls die aktuelle Position des Rotors des Elektromotors (und damit dessen magnetischer Fluss) bekannt sind, ist der Raumzeiger der notwendigen Statorspannung zu jedem Drehmomentsollwert berechenbar (proportional zum Statorstrom). Falls das erlaubte Intervall für das Drehmoment bekannt ist (z.B.: (0< Drehmoment<erstes maximales Drehmoment) oder (-erstes maximales Drehmoment < Drehmoment<erstes maximales Drehmoment)), kann ein Bereich für den zulässigen Statorspannungsraumzeiger (Raumzeiger der Motorspannung) berechnet werden. Hierbei wird insbesondere eine für die Stromregelung zusätzlich notwendige Spannungsreserve beachtet.

Beispielsweise würde bei einem mittels eines B6-Umrichters betriebenen Elektromotors ein erstes maximales Drehmoment von 2 Nm bestimmt werden. Sofern der Elektromotor dieses maximale Drehmoment in der Betriebsart "sicher begrenztes Drehmoment" (Safely Limited Torque) aufwiese, wäre ein sicherer Betrieb insbesondere nicht mehr ermöglicht.

Während des Betriebs des Elektromotors würde beispielsweise ein elektrischer Motorstrom von 1,5 A erfasst werden. Ausgehend von dem ersten maximalen Drehmoment von 2 Nm würde unter Zuhilfenahme des erfassten Motorstroms von 1,5 A bei einer mechanischen Drehzahl 1000 Min-1 eine elektrische Motorspannung von 150 V bestimmt werden. Diese entspräche im Wesentlichen der elektrischen Motorspannung, die bei dem erfassten Motorstrom zu dem vorgegebenen ersten maximalen Drehmoment korrespondiert. Hierfür werden insbesondere die für einen Fachmann bekannten Formeln

$$U_d = R_1 I_d + \frac{d\Psi_d}{dt} - p\omega_{mech}\Psi_q$$

$$U_q = R_1 I_q + \frac{d\Psi_q}{dt} + p\omega_{mech}\Psi_d$$

$$\omega_{mech} = \frac{2\pi}{60}n$$

$$\Psi_d = L_d I_d + \Psi_0$$

$$\Psi_q = L_q I_q$$

$$M = \frac{3p}{2}\left(I_q \Psi_0 - I_d I_q (L_d - L_q)\right)$$

verwendet, bei der der funktionale Zusammenhang zwischen dem Drehmoment, der Drehzahl, dem Motorstrom sowie der elektrischen Motorspannung beschrieben ist. Daraus ergibt sich eine maximal zulässige Motorspannung für den Betrieb mit sicher begrenztem Drehmoment von

$$U_{max}(M_{max}, n) = \sqrt{U_d^2 + U_q^2} + U_{Reserve}$$

wobei $U_{Reserve}$ eine maximal erlaubte zusätzliche Spannung ist, die applikationsabhängig wählbar ist. Diese $U_{Reverse}$ vermeidet Fehlalarme, die durch dynamische Effekte des Stromreglers und/oder durch Messfehler in der Messwerterfassung sonst ausgelöst werden könnten. Wählt man $U_{Reverse}$ = 20 V, ergibt sich beispielweise eine maximale Spannung von Umax = 150 V + 20V = 170 V.

Diese berechnete elektrische Motorspannung wird als erwarteter maximaler Hilfswert herangezogen.

Ferner wird die tatsächliche elektrische Motorspannung von beispielsweise 140 V erfasst, wobei die elektrische Motorspannung als Hilfswert verwendet würde.

In einem weiteren Arbeitsschritt wird die berechnete elektrische Motorspannung, die dem erwarteten maximalen Hilfswert entspricht, mit der erfassten Motorspannung, die dem Hilfswert entspricht, verglichen. Infolgedessen ist somit bei einem Anstieg der Motorspannung bereits vor Realisierung des ersten maximalen Drehmoments eine Reaktion ermöglicht. Überschreitet die gemessene Motorspannung den maximal erlaubten Wert, wird ein Fehlerzustand erkannt und eine Fehlerreaktion (z.B. STO) ausgelöst.

Der Umrichter weist einen Halbleiterschalter zur Steuerung eines Energieflusses zu einem Elektromotor auf. Bei Betrieb wird ein elektrischer Strom erfasst, mittels dessen der Elektromotor betrieben wird. In einem weiteren Arbeitsschritt, der vor, nach oder besonders bevorzugt zeitgleich mit der Erfassung des elektrischen Stroms erfolgt, wird ein Hilfswert erfasst. In einem dritten Arbeitsschritt wird ein maximales Drehmoment bestimmt. In einem vierten Arbeitsschritt wird anhand des ersten maximalen Drehmoments und des erfassten Motorstroms ein erwarteter maximaler Hilfswert bestimmt. Der erfasste Hilfswert wird mit dem maximalen Hilfswert verglichen. Vorzugsweise umfasst der Umrichter einen Kanal, bei dem eine sichere Funktion ausgeführt wird, falls der erfasste Hilfswert größer als der erwartete maximale Hilfswert ist. Auf dies Weise ist ein Kanal eines Sicherheitssystems erstellt. Beispielsweise ist das Sicherheitssystem des Umrichters einkanalig aufgebaut. Bevorzugt jedoch ist das Sicherheitssystem mehrkanalig aufgebaut, insbesondere redundant, was die Sicherheit erhöht. Insbesondere werden das Drehmoment und/oder die Drehzahl und/oder eine Drehmomentänderung direkt gemessen und/oder mittels anderweitiger Berechnung ermittelt.

Geeigneterweise ist der Umrichter Bestandteil einer Industrieanlage. Insbesondere weist der Umrichter eine maximale Leitungsabgabe zwischen 700 W und 500 kW auf. Zweckmäßigerweise ist die Leitungsabgabe größer oder gleich 1 kW, 5 kW, 10 kW, 50 kW, 100 kW oder 200 kW. Zum Beispiel ist die Leitungsabgabe kleiner oder gleich 400 kW, 250 kW, 100 kW, 50 kW, 15 kW oder 2 kW.

Nachfolgend wird ein Ausführungsbeispiel der Erfindung anhand einer Zeichnung näher erläutert. Darin zeigen:

Fig. 1      schematisch eine mittels eines Umrichters betriebene elektrische Maschine,

Fig. 2      in Raumzeigerdarstellung einen Motorstrom, und

Fig. 3      ein Verfahren zum Betrieb des Umrichters.

Einander entsprechende Teile sind in allen Figuren mit den gleichen Bezugszeichen versehen.

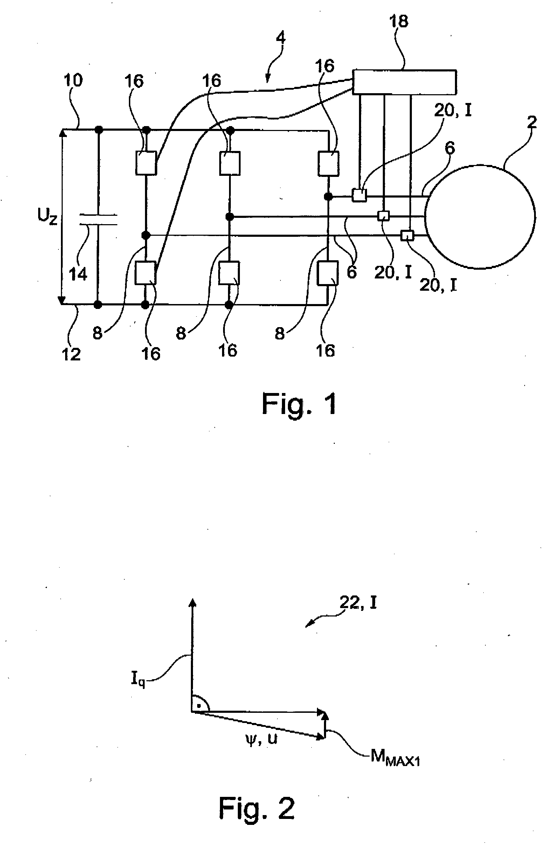

In Fig. 1 ist ein Elektromotor 2 dargestellt, der mittels eines Umrichters 4 betrieben ist. Der Elektromotor 2 ist dreiphasig. Mit anderen Worten wird der Elektromotor 2 mittels dreier Leitungen 6 bestromt, von denen jede mit einem Brückenzweig 8 des Umrichters 4 elektrisch kontaktiert ist. Mittels der zueinander parallel geschalteten Brückenzweige 8 ist ein positiver Pol 10 elektrisch mit einem negativen Pol 12 des Umrichters 4 kontaktiert, die zueinander eine im Wesentlichen konstante elektrische Zwischenkreisspannung $U_Z$ in Höhe von 1200V aufweisen. Dies wird mittels eines Zwischenkreiskondensators 14 sichergestellt, der parallel zu den einzelnen Brückenzweigen 8 geschalten ist. Jeder der Brückenzweige 8 umfasst zwei in Reihe geschaltete Halbleiterschalter 16, jeweils in Form eines IGBTs. In einer Alternative hierzu ist zu dem IGBT parallel eine Freilaufdiode geschaltet. Die Kontaktierung der jeweiligen Leitung 6 erfolgt zwischen den beiden Halbleiterschaltern 16 des jeweiligen Brückenzweigs 8. Jeder der Halbleiterschalter 16 ist signaltechnisch mit einer Steuereinheit 18 gekoppelt, wobei das Gate des jeweiligen Halbleiterschalters 16 elektrisch mit der Steuereinheit 18 kontaktiert ist. In Fig. 1 sind lediglich zwei derartige Signalleitungen gezeigt. Mit der Steuereinheit 18 sind ferner drei Stromsensoren 20 signaltechnisch gekoppelt, von denen jeder einer der Leitungen 6 zugeordnet ist. Mittels der Stromsensoren 20 wird bei Betrieb ein Motorstrom I erfasst und mittels der Steuereinheit 18 ein Statorstromzeiger 22 des Motorstroms I berechnet.

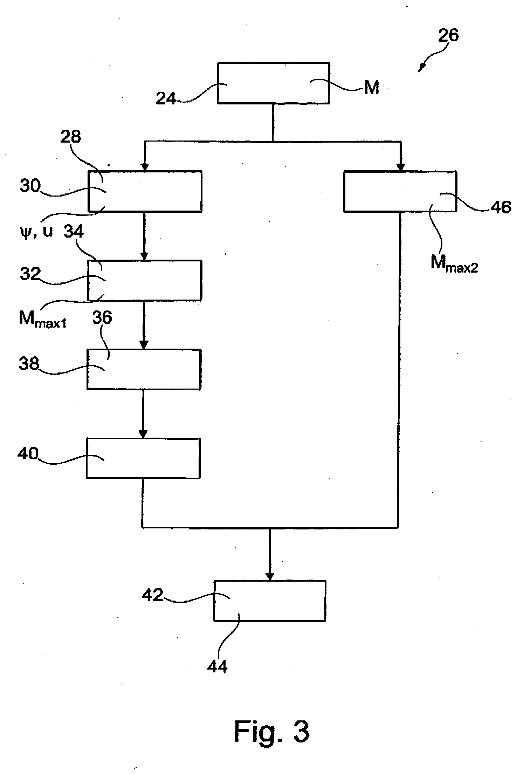

In Fig. 2 ist der Statorstromzeiger 22 des Motorstroms I dargestellt, wenn der Elektromotor 2 ein permanent erregter Synchronmotor mit isotroper Statorinduktivität im Normalbetrieb ist. Die Ermittlung erfolgt in einem ersten Arbeitsschritt 24 eines in Fig. 3 dargestellten Verfahrens 26. Der Motorstrom I weist einen drehmomentbildende Komponente $I_q$ auf, die proportional zu einem aktuellen Drehmoment M des Elektromotors 2 ist. In einem zweiten Arbeitsschritt 28 wird ein Hilfswert 30 erfasst, wobei lediglich der Betrag erfasst wird, also der Hilfswert 30 vorzeichenlos gewählt wird. Als Hilfswert 30 wird entweder ein magnetischer Fluss $\Psi$ oder aber eine Motorspannung U herangezogen, die symbolisch in Fig. 2 dargestellt sind, wobei diese mit einer einen flussbildenden Komponente des Motorstroms I korrespondieren. Hierzu sind der magnetische Fluss $\Psi$ bzw. der Motorstrom U anhand bekannter physikalischer Zusammenhänge unter Einbeziehung der Induktivität sowie der Widerstände des Elektromotors 2 zur Anpassung der physikalischen Einheiten transformiert.

Die Motorspannung U wird entweder mittels der auch zur Messung von elektrischer Spannung ertüchtigter Stromsensoren 20 oder aber weiterer, nicht dargestellter Sensoren gemessen. Alternativ hierzu wird die Motorspannung U mittels der Steuereinheit 18 berechnet, wobei die Zwischenkreisspannung $U_Z$ sowie die Schaltzustände der einzelnen Halbleiterschalter 16 herangezogen werden, die mittels mit der Steuereinheit 18 generierten Impulsen angesteuert werden. Somit ist die Information der Schaltzustände der Halbleiterschalter 16 bereits vorhanden, wobei die Zwischenkreisspannung $U_Z$ mittels des Zwischenkreiskondensators 14 im Wesentlichen konstant gehalten wird. Folglich ist bei Wissen um den Aufbau des Elektromotors 2 auch die Motorspannung U berechenbar, die zwischen den einzelnen Leitungen 6 herrscht, also die an den einzelnen Spulen des Stators des Elektromotors 2 anliegt.

In einem dritten Arbeitsschritt 32 wird ein erstes maximales Drehmoment $M_{max1}$ bestimmt. Das erste maximale Drehmoment $M_{max1}$ ist entweder eine feste Vorgabe, abhängig von einer Winkellage des Rotors zu dem Stator der elektrischen Maschine 2 oder aber das aktuelle Drehmoment M zuzüglich eines ersten Werts 34, der entweder beispielsweise konstant 50 Nm ist oder aber beispielsweise 10% des aktuellen Drehmoments M beträgt. In einem vierten Arbeitsschritt 36 wird anhand des erfassten Motorstroms I sowie des ersten maximalen Drehmoments $M_{max1}$ ein vorzeichenloser erwarteter maximaler Hilfswert 38 bestimmt. Hierfür wird zunächst die Differenz zwischen dem aktuellen Drehmoment M sowie dem ersten maximalen Drehmoment $M_{max1}$ ermittelt. Falls als Hilfswert 30 die Motorspannung U herangezogen wird, wird ausgehend von der ermittelten Drehmomentdifferenz zwischen dem aktuellen Drehmoment M sowie dem ersten maximalen Drehmoment $M_{max1}$ diejenige elektrische Spannung berechnet, die innerhalb einer bestimmten Zeitspanne zu einem dem ersten maximalen Drehmoment $M_{max1}$ entsprechenden aktuellen Drehmoment M führen würde.

Mit anderen Worten wird berechnet, welchen Wert die Motorspannung U betragen müsste, damit innerhalb der bestimmten Zeitspanne bei ansonsten gleichbleibenden Bedingungen das aktuelle Drehmoment M gleich ersten maximalen Drehmoment $M_{max1}$ betragen würde. Der erwartete maximale Hilfswert 38 ist vorzeichenlos, es wird also ermittelt, wie groß die Motorspannung U bzw. der magnetische Fluss $\Psi$ sein müsste, damit das erste maximale Drehmoment $M_{max1}$ erreicht würde, unabhängig von der Drehrichtung des Elektromotors. In Fig. 2 ist ein zu dem ersten maximalen Drehmoment $M_{max1}$ korrespondierender Vektor dargestellt, der folglich bei bekanntem Hilfswert 38 zu einer zu dem aktuellen Drehmoment M des Elektromotors 2 korrespondierenden Komponente des Motorstroms 22 führen würde.

In einem fünften Arbeitsschritt 40 wird der erwartete maximale Hilfswert 38 mit der erfassten Hilfswert 38 verglichen. Falls der erfasste Hilfswert 30 größer als der erwartete maximale Hilfswert 38 ist, wird ein sechster Arbeitsschritt 42 ausgeführt. Hierbei wird eine sichere Funktion 44 ausgeführt, und zwar sicher abgeschaltetes Moment. Hierfür werden sämtliche Impulse gelöscht, die mittels der Steuereinheit 18 erstellt sind, und mittels derer die Halbleiterschalter 16 angesteuert werden. Infolgedessen sind sämtliche Halbleiterschalter in einem sperrenden Zustand. Es ist folglich keine Stromführung mittels der Halbleiterschalter 16 ermöglicht. Somit ist eine Energieversorgung des Elektromotors 2 unterbunden, so dass dessen Rotor momentenlos austrudelt.

In einem siebten Arbeitsschritt 46, der im Wesentlichen unverzüglich nach dem ersten Arbeitsschritt 24 ausgeführt wird, wird das aktuelle Drehmoment M mit einem zweiten maximalen Drehmoment $M_{max2}$ verglichen. Falls das aktuelle Drehmoment M größer als das zweite maximale Drehmoment $M_{max2}$ ist, wird ebenfalls der sechste Arbeitsschritt 42 ausgeführt. Das zweite maximale Drehmoment $M_{max2}$ ist beispielsweise gleich dem ersten maximalen Drehmoment $M_{max1}$, insbesondere sofern das erste maximale Drehmoment $M_{max1}$ fest vorgegeben ist. Das Verfahren 26 wird beispielsweise dann ausgeführt, wenn eine Wartung des Elektromotors 2 erfolgt. Insbesondere wird hierbei ein mittels des Elektromotors 2 angetriebenes Werkzeug eingestellt, wobei der Elektromotor 2 geeigneterweise mittels einer Drehzahlregelung betrieben wird. Die Drehzahl ist derart eingestellt, dass einer die Einstellung vornehmenden Person ausreichend Zeit zum Verlassen eines Gefahrenbereichs zur Verfügung steht.

Bezugszeichenliste

2 Elektromotor
4 Umrichter

| 6 | Leitung |
| 8 | Brückenzweige |
| 10 | positiver Pol |
| 12 | negativer Pol |
| 14 | Zwischenkreiskondensator |
| 16 | Halbleiterschalter |
| 18 | Steuereinheit |
| 20 | Stromsensor |
| 22 | Statorstromzeiger |
| 24 | erster Arbeitsschritt |
| 26 | Verfahren |
| 28 | zweiter Arbeitsschritt |
| 30 | Hilfswert |
| 32 | dritter Arbeitsschritt |
| 34 | erster Wert |
| 36 | vierter Arbeitsschritt |
| 38 | erwarteter maximaler Hilfswert |
| 40 | fünfter Arbeitsschritt |
| 42 | sechster Arbeitsschritt |
| 44 | sichere Funktion |
| 46 | siebter Arbeitsschritt |

| I | Motorstrom |
| $I_q$ | drehmomentbildende Komponente |
| M | Drehmoment |
| $M_{max1}$ | erstes maximales Drehmoment |
| $M_{max2}$ | zweites maximales Drehmoment |
| U | Motorspannung |
| $U_Z$ | Zwischenkreisspannung |
| $\Psi$ | Magnetischer Fluss |

**Patentansprüche**

1. Verfahren (26) zur Drehmomentüberwachung eines mittels eines Umrichters (4) betriebenen Elektromotors (2), bei dem

   - ein elektrischer Motorstrom (I) erfasst wird,
   - ein Hilfswert (30) erfasst wird,
   - ein erstes maximales Drehmoment ($M_{max1}$) bestimmt wird, **dadurch gekennzeichnet, daß**
   - anhand des ersten maximalen Drehmoments ($M_{max1}$) und des erfassten Motorstroms (I) ein erwarteter maximaler Hilfswert (38) bestimmt wird, wobei der erwartete maximale Hilfswert (38) zu einem Anstieg eines aktuellen Drehmoments (M) des Elektromotors (2) zu dem ersten maximalen Drehmoment ($M_{max1}$) in einer bestimmten Zeitspanne korrespondiert und
   - der erfasste Hilfswert (30) mit dem erwarteten maximalen Hilfswert (38) verglichen wird.

2. Verfahren (26) nach Anspruch 1,
   **dadurch gekennzeichnet,**
   **dass** eine sichere Funktion (44) ausgeführt wird, insbesondere sicher abgeschaltetes Moment, falls der erfasste Hilfswert (30) größer als der erwartete maximale Hilfswert (38) ist.

3. Verfahren (26) nach Anspruch 1 oder 2,
   **dadurch gekennzeichnet,**
   **dass** der Hilfswert (30) und der erwartete maximale Hilfswert (38) vorzeichenlos gewählt werden.

4. Verfahren (26) nach einem der Ansprüche 1 bis 3,
   **dadurch gekennzeichnet,**
   **dass** eine drehmomentbildende Komponente ($I_q$) eines Statorstromzeigers (22) des elektrischen Motorstroms (I) ermittelt und hieraus das aktuelle Drehmoment (M) bestimmt wird.

5. Verfahren (26) nach Anspruch 4,
   **dadurch gekennzeichnet,**
   **dass** eine sichere Funktion (44) ausgeführt wird, insbesondere sicher abgeschaltetes Moment, falls das aktuelle Drehmoment (M) größer als ein zweites maximales Drehmoment ($M_{max2}$) ist.

6. Verfahren (26) nach Anspruch 4 oder 5,
   **dadurch gekennzeichnet,**
   **dass** als erstes maximales Drehmoment ($M_{max1}$) das aktuelle Drehmoment (M) zuzüglich eines ersten Werts (34) gewählt wird.

7. Verfahren (26) nach einem der Ansprüche 1 bis 6,
   **dadurch gekennzeichnet,**
   **dass** als Hilfswert (30) ein magnetischer Fluss ($\Psi$) gewählt wird.

8. Verfahren (26) nach einem der Ansprüche 1 bis 6,
   **dadurch gekennzeichnet,**
   **dass** als Hilfswert (30) eine elektrische Motorspannung (U) gewählt wird, insbesondere ein Raumzeiger der Motorspannung.

9. Verfahren (26) nach Anspruch 8,
   **dadurch gekennzeichnet,**
   **dass** die elektrische Motorspannung (U) gemessen oder anhand einer Zwischenkreisspannung ($U_Z$) ermittelt wird, insbesondere unter Heranziehung eines Zustands eine Halbleiterschalters (16) des Umrichters (4).

10. Umrichter (4), der eine Steuereinheit (18) und einen Halbleiterschalter (16) zur Steuerung eines Energieflusses zu einem Elektromotor (2) aufweist, und der gemäß einem Verfahren (26) nach einem der Ansprüche 1 bis 9 betrieben ist.

**Claims**

1. Method (26) for monitoring the torque of an electric motor (2) operated by means of a converter (4), in which

- an electric motor current (I) is detected,
- an auxiliary value (30) is detected,
- a first maximum torque ($M_{max1}$) is determined,

**characterised in that**

- an expected maximum auxiliary value (38) is determined by means of the first maximum torque ($M_{max1}$) and the detected motor current (I), wherein the expected maximum auxiliary value (38) corresponds to an increase of a current torque (M) of the electric motor (2) relative to the first maximum torque ($M_{max1}$) in a determined time period, and
- the detected auxiliary value (30) is compared to the expected maximum auxiliary value (38).

2. Method (26) according to claim 1,
   **characterised in that**
   a secure function (44) is carried out, in particular securely disabled moment, if the detected auxiliary value (30) is greater than the expected maximum auxiliary value (38).

3. Method (26) according to claim 1 or 2,
   **characterised in that**
   the auxiliary value (30) and the expected maximum auxiliary value (38) are selected unsigned.

4. Method (26) according to one of claims 1 to 3,
   **characterised in that**
   a torque-forming component ($I_q$) of a stator current pointer (22) of the electric motor current (I) is ascertained and, from this, the current torque (M) is determined.

5. Method (26) according to claim 4,
   **characterised in that**
   a secure function (44) is carried out, in particular securely disabled moment, if the current torque (M) is greater than a second maximum torque ($M_{max2}$).

6. Method (26) according to claim 4 or 5,
   **characterised in that**
   the current torque (M) is selected together with a first value (34) as the first maximum torque ($M_{max1}$).

7. Method (26) according to one of claims 1 to 6,
   **characterised in that**
   a magnetic flow ($\psi$) is selected as the auxiliary value (30).

8. Method (26) according to one of claims 1 to 6,
   **characterised in that**
   an electric motor voltage (U) is selected as the auxiliary value (30), in particular a space vector of the motor voltage.

9. Method (26) according to claim 8,
   **characterised in that**

the electric motor voltage (U) is measured or ascertained by means of an intermediate circuit voltage ($U_Z$), in particular by using a state of a semi-conductor switch (16) of the converter (4).

10. Converter (4) that has a control unit (18) and a semiconductor switch (16) for controlling an energy flow to an electric motor (2) and is operated according to a method (26) according to one of claims 1 to 9.

**Revendications**

1. Procédé (26) pour surveiller le couple d'un moteur électrique (2) actionné au moyen d'un convertisseur (4), procédé dans lequel

   - un courant électrique de moteur (I) est mesuré,
   - une valeur auxiliaire (30) est mesurée,
   - un premier couple maximal ($M_{max1}$) est déterminé,

   **caractérisé en ce que**

   - une valeur auxiliaire maximale attendue (38) est déterminée au moyen du premier couple maximal ($M_{max1}$) et du courant de moteur mesuré (I), la valeur auxiliaire maximale attendue (38) se rapportant à une augmentation d'un couple actuel (M) du moteur électrique (2) correspondant au premier couple maximal ($M_{max1}$) durant un laps de temps particulier, et
   - la valeur auxiliaire mesurée (30) est comparée à la valeur auxiliaire maximale attendue (38).

2. Procédé (26) selon la revendication 1, **caractérisé en ce qu'**une fonction de sécurité (44) est réalisée, en particulier l'absence sûre du couple, dans le cas où la valeur auxiliaire mesurée (30) est supérieure à la valeur auxiliaire maximale attendue (38).

3. Procédé (26) selon la revendication 1 ou 2, **caractérisé en ce que** la valeur auxiliaire (30) et la valeur auxiliaire maximale attendue (38) sont choisies sans signe.

4. Procédé (26) selon l'une des revendications 1 à 3, **caractérisé en ce qu'**une composante de formation du couple ($I_q$) d'un vecteur de courant de stator (22) du courant électrique de moteur (I) est mesurée et le couple actuel (M) est déterminé sur cette base.

5. Procédé (26) selon la revendication 4, **caractérisé en ce qu'**une fonction de sécurité (44) est réalisée, en particulier l'absence sûre de couple, dans le cas où le couple actuel (M) est supérieur à un second couple maximal ($M_{max2}$).

6. Procédé (26) selon la revendication 4 ou 5, **caractérisé en ce que** le couple actuel (M) auquel est ajoutée une première valeur (34) est choisi comme premier couple maximal ($M_{max1}$).

7. Procédé (26) selon l'une des revendications 1 à 6, **caractérisé en ce qu'**un flux magnétique ($\Psi$) est choisi comme valeur auxiliaire (30).

8. Procédé (26) selon l'une des revendications 1 à 6, **caractérisé en ce qu'**une tension électrique de moteur (U) est choisie comme valeur auxiliaire (30), en particulier un vecteur spatial de la tension de moteur.

9. Procédé (26) selon la revendication 8, **caractérisé en ce que** la tension électrique de moteur (U) est mesurée ou déterminée à l'aide d'une tension de circuit intermédiaire ($U_Z$), en particulier en utilisant un état d'un commutateur à semi-conducteur (16) du convertisseur (4).

10. Convertisseur (4) comprenant une unité de commande (18) et un commutateur à semi-conducteur (16) pour commander un flux d'énergie vers un moteur électrique (2), et qui est actionné par un procédé (26) selon l'une des revendications 1 à 9.

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009021823 A1